# EUROPEAN PATENT SPECIFICATION

(11) **EP 1 440 857 B1**
(45) Date of publication and mention of the grant of the patent: **19.10.2005**
(21) Application number: 03029147.0
(22) Date of filing: 18.12.2003
(51) Int. Cl.: B60T 7/06, G05G 1/14

(54) **A device for engaging the push-rod of the power brake to the brake pedal of a motor vehicle**
Einrichtung für die Befestigung einer Betätigungsstange eines Bremskraftverstärkers an ein Bremspedal
Dispositif de fixage d'un tige d'actionnement d'un servofrein à un pédale de frein

(30) Priority: 15.01.2003 IT TO20030006
(43) Date of publication of application: 28.07.2004
(73) Proprietor: S.I.V. S.p.A., 10040 Volvera (Torino) (IT)
(72) Inventor: La Rosa, Giacomo, 90144 Palermo (IT); Cavaglia, Renato, 10040 Volvera (Torino) (IT); Ballari, Marco, 10040 Gerbole Di Volvera (Torino) (IT)
(74) Representative: Di Francesco, Gianni

(56) References cited:
- WO-A-99/56025
- DE-U- 8 816 272
- US-A- 3 766 802

## Description

The present invention relates to a device for engaging the push-rod of the power brake to the brake pedal of a motor vehicle. A device of this kind is known from document WO 99/56025.

Currently known are systems for connecting the push-rod to the pedal, which envisage elastic means for fast installation which enable snap-action connection, with the aid of a spring clip, of the spherical end of the push-rod of the power brake, in a hemispherical seat made of plastic material fixed to the aforesaid pedal.

The above type of device involves the problem that, if on the one hand the spherical shape of the end of the push-rod enables quite a convenient insertion thereof in the installation means located on the pedal, on the other it does not oppose sufficient resistance to prevent said end from coming out. It may in fact be sufficient to exert a moderate thrust under the pedal to slide the push-rod out of the seat and irreparably prevent use of the brake of the motor vehicle.

The purpose of the present invention is to provide a connection device that will overcome the aforesaid drawback.

The above and other purposes and advantages, which will emerge more clearly from what follows, are achieved according to the invention by a device for engaging the brake pedal of a motor vehicle to the push-rod of the power brake, said device presenting the characteristics specified in the first claim.

There now follows a description of the structural and functional characteristics of a preferred, but non-limiting, embodiment of the device according to the invention. Reference is made to the attached drawings, in which:

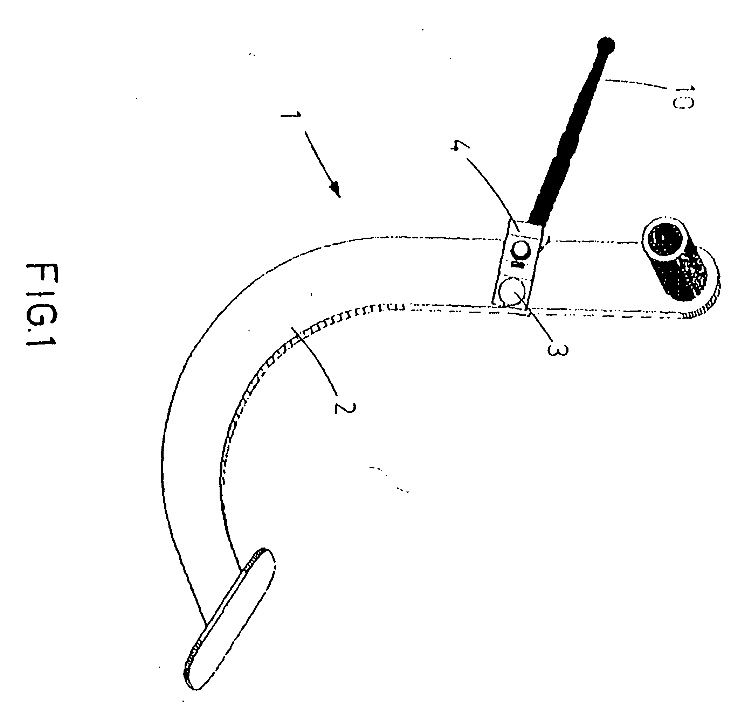

- Figure 1 is a perspective view of a brake pedal of a motor vehicle, with the device for engaging the push-rod mounted in the operative position;

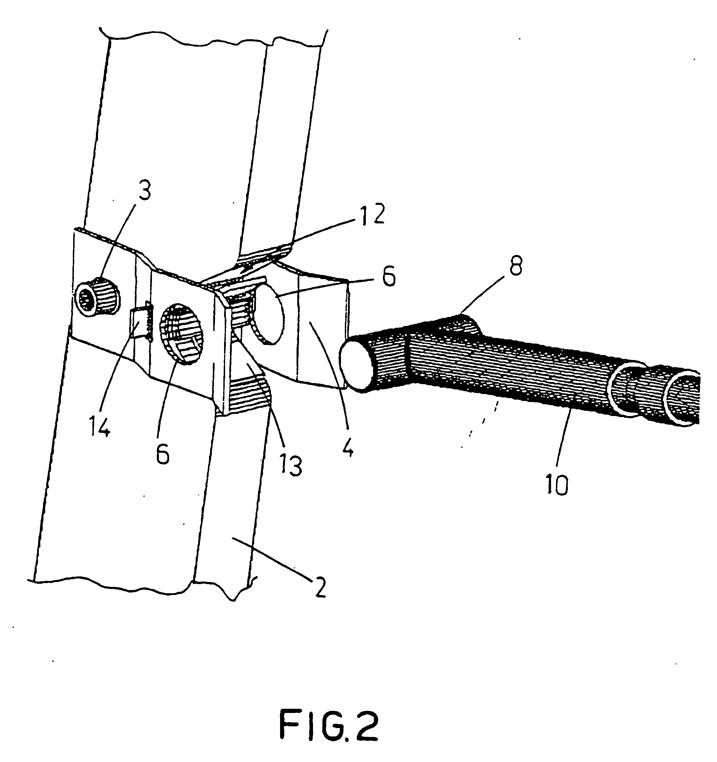

- Figure 2 is an exploded view of the engagement device and of the end of the push-rod of the power brake; and

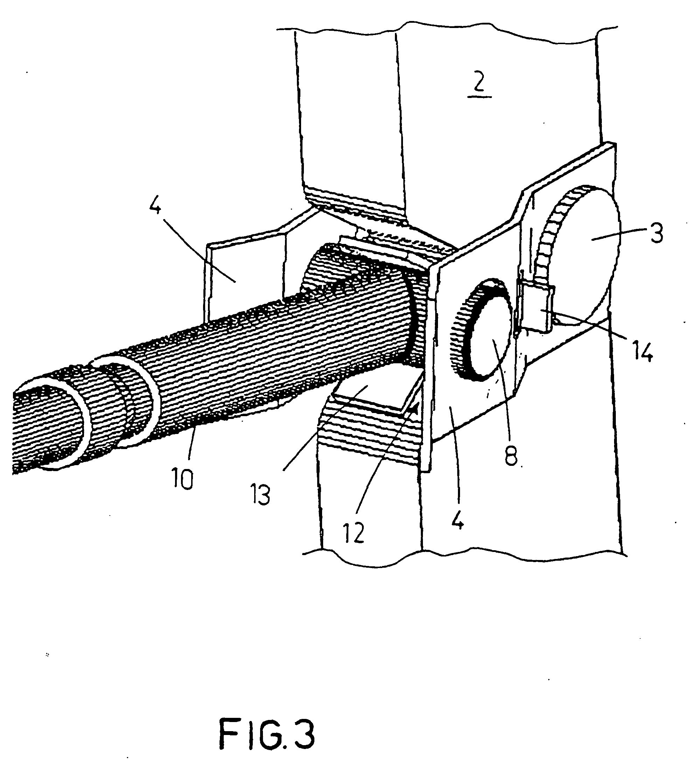

- Figure 3 is an enlarged perspective view of the engagement device assembled and with the push-rod inserted therein.

With reference to the figures, the reference number 1 designates, as a whole, a brake pedal of a motor vehicle, on the arm 2 of which there is fixed, by means of a through pin 3, a substantially U-shaped spring clip 4. Said spring clip is preferably made of music wire and has two holes 6 on the ends of the two arms, said holes being designed to receive, by snap-action, the ends 8 of the push-rod 10, which terminates with a substantially T-shaped head.

The two branches of the spring clip 4 may be made separately and be assembled by means of the through pin 3, which is fixed in a known way and connects them to the arm 2 of the pedal, as occurs in the case of the preferred embodiment, illustrated in the attached figures. In an area corresponding to the spring clip, on the arm of the pedal, there is made a recess 12, which enables the T-shaped head of the push-rod to be englobed in the profile of the arm so as to prevent presence of any projecting parts that could give rise to problems. Between the recess 12 and the T-shaped head 8 there is set an antifriction and antivibration elastic plate 13, which is held in position by tabs 14 inserted in holes made once again in the branches of the spring clip 4.

From the attached drawings it is evident that, once the spring clip 4 is fixed on the arm 2, and the plate 13 is inserted, it will be sufficient to insert the head 8 by snap action in the holes 6 of the spring clip in order to obtain a secure and stable connection, but one that can also be easily released by opening the branches of the spring clip with an appropriate tool, for example a pair of pliers.

## Claims

1. A device for engaging the push-rod of the power brake to the arm of the brake pedal of a motor vehicle, **characterized in that** it is made up of a substantially U-shaped spring clip (4), fixed on the arm (2),of the pedal and provided with holes (6) designed to receive by snap action the terminal parts of the substantially T-shaped end (8) of the push-rod (10).

2. The device for engaging the push-rod of the power brake according to Claim 1, **characterized in that** the spring clip (4) is fixed on the arm of the pedal by means of a through pin (3).

3. The device for engaging the push-rod of the power brake according to Claim 1, **characterized in that** the spring clip (4) is fixed on the arm of the pedal in an area corresponding to a recess (12), which enables the T-shaped end of the push-rod to be englobed in the profile of the arm (2).

4. The device for engaging the push-rod of the power brake according to Claims 1 and 3, **characterized in that** set between the recess (12) and the T-shaped end (8) is an antifriction and antivibration elastic plate (13).

5. The device for engaging the push-rod of the power brake according to Claim 1, **characterized in that** the spring clip is made up of two parts.

## Patentansprüche

1. Eine Vorrichtung zum In-Eingriff-Bringen der Stößelstange des Bremskraftverstärkers mit dem Arm des Bremspedals eines Kraftfahrzeugs, **dadurch gekennzeichnet, dass** sie aus einer im Wesentlichen U-förmigen federnden Klemme (4) besteht, die an dem Arm (2) des Pedals befestigt und mit Öffnungen (6) versehen ist, die so ausgebildet sind, dass sie durch Einschnappen die Endteile des im Wesentlichen T-förmigen Endes (8) der Stößelstange (10) aufnehmen.

2. Die Vorrichtung zum In-Eingriff-Bringen der Stößelstange des Bremskraftverstärkers nach Anspruch 1, **dadurch gekennzeichnet, dass** die federnde Klemme (4) mithilfe eines Durchsteckstiftes (3) an dem Arm des Pedals befestigt ist.

3. Die Vorrichtung zum In-Eingriff-Bringen der Stößelstange des Bremskraftverstärkers nach Anspruch 1, **dadurch gekennzeichnet, dass** die federnde Klemme (4) in einem Bereich an dem Arm des Pedals befestigt ist, der einer Aussparung (12) entspricht, die ein Einschließen des T-förmigen Endes der Stößelstange in das Profil des Arms (2) ermöglicht.

4. Die Vorrichtung zum In-Eingriff-Bringen der Stößelstange des Bremskraftverstärkers nach Anspruch 1 und 3, **dadurch gekennzeichnet, dass** zwischen der Aussparung (12) und dem T-förmigen Ende (8) eine reibungs- und vibrationsvermindernde elästische Platte (13) eingesetzt ist.

5. Die Vorrichtung zum In-Eingriff-Bringen der Stößelstange des Bremskraftverstärkers nach Anspruch 1, **dadurch gekennzeichnet, dass** die federnde Klemme aus zwei Teilen besteht.

## Revendications

1. Dispositif pour engager la tige de poussée du frein à commande hydraulique assisté par servofrein avec le bras de la pédale de frein d'un véhicule motorisé, **caractérisé en ce qu'**il est composé d'une agrafe-ressort (4) sensiblement en forme de U, fixée sur le bras (2), de la pédale et pourvue d'orifices (6) conçus pour recevoir par action de fixation les pièces terminales de l'extrémité (8) sensiblement en forme de T de la tige de poussée (10).

2. Dispositif pour engager la tige de poussée du frein à commande hydraulique assisté par servofrein selon la revendication 1, **caractérisé en ce que** l'agrafe-ressort (4) est fixée sur le bras de la pédale au moyen d'un axe traversant (3).

3. Dispositif pour engager la tige de poussée du frein à commande hydraulique assisté par servofrein selon la revendication 1, **caractérisé en ce que** l'agrafe-ressort (4) est fixée sur le bras de la pédale dans une zone correspondant à un évidement (12), qui permet à l'extrémité en forme de T de la tige de poussée d'être englobée dans le profil du bras (2).

4. Dispositif pour engager la tige de poussée du frein à commande hydraulique assisté par servofrein selon les revendications 1 et 3, **caractérisé en ce que**, défini entre l'évidement (12) et l'extrémité (8) en forme de T, se trouve une plaque élastique (13) anti-frottement et anti-vibrations.

5. Dispositif pour engager la tige de poussée du frein à commande hydraulique assisté par servofrein selon la revendication 1, **caractérisé en ce que** l'agrafe-ressort est composée de deux pièces.
